# FASCICULE DE BREVET EUROPEEN

(11) **EP 3 878 709 B1**
(45) Date de publication et mention de la délivrance du brevet: **03.05.2023**
(21) Numéro de dépôt: 21161438.3
(22) Date de dépôt: 09.03.2021
(51) Int. Cl.: B61D 1/00, B61D 13/00, B61D 37/00

(54) **VÉHICULE TERRESTRE GUIDÉ**
GELENKTES LANDFAHRZEUG
GUIDED LAND VEHICLE

(30) Priorité: 10.03.2020 FR 2002375
(43) Date de publication de la demande: 15.09.2021
(73) Titulaire: ALSTOM Transport Technologies, 93400 Saint-Ouen (FR)
(72) Inventeur: TAILLANDIER, Sébastien, 17690 ANGOULINS (FR); FAIVRE, Benoît, 17220 SAINTE-SOULLE (FR)
(74) Mandataire: Lavoix

(56) Documents cités:
- EP-A1- 1 024 070
- EP-A1- 2 314 492
- CN-A- 109 050 544
- CN-U- 205 554 186
- FR-A1- 2 935 930
- FR-A1- 3 051 300
- FR-A1- 3 068 841

## Description

La présente invention concerne une véhicule terrestre guidé comprenant :
- un toit,
- des moyens d'alimentation en cas d'effacement de ligne aérienne de contact, embarqués sur le toit, et
- des moyens de traction embarqués sur le toit.

Les véhicules terrestres guidés, notamment les tramways, comprennent une pluralité de voitures reposant sur des bogies constitués de deux essieux. Par essieu, on entend de façon générale une paire de roues coaxiales d'appui sur les rails d'une voie ferrée.

Les véhicules terrestres guidés circulent généralement sur une voie définissant la trajectoire du véhicule et sont alimentés par une ligne aérienne de contact au moyen d'un pantographe.

Cependant, dans certains environnements, une ligne aérienne de contact est peu esthétique voire ne peut être installée.

Afin de permettre à un véhicule terrestre guidé de circuler sur une portion dépourvue de ligne aérienne de contact, il est nécessaire de l'alimenter par des sources différentes nécessitant des équipements supplémentaires à prévoir sur le véhicule.

Dans les véhicules terrestres guidés, un certain nombre d'équipements, dont des moyens de traction comprenant une pluralité de coffres de traction et un convertisseur statique, ou des moyens de conditionnement d'air des salles de voyageurs, sont disposés sur le toit des voitures. Il convient de répartir ces équipements de manière à répartir au mieux les charges appliquées sur les essieux supportant les voitures.

Ainsi, le toit des véhicules terrestres guidés est souvent encombré et la charge à l'essieu est trop importante pour implanter de nouveaux équipements.

FR 3051300 A1 décrit un véhicule ferroviaire à freinage électrodynamique comprenant un hacheur de puissance porté par une première voiture, un rhéostat porté par une seconde voiture, des moyens de connexion électrique entre le hacheur de puissance et le rhéostat, et des moyens de protection en mode commun. Dans ce véhicule, les moyens de connexion électrique entre le hacheur de puissance et le rhéostat comprennent un conducteur électrique de phase et les moyens de protection en mode commun comprennent un conducteur électrique d'accompagnement de masse cheminant le long du ou de chaque conducteur électrique de phase. Chaque conducteur électrique d'accompagnement de masse comprend deux extrémités reliées électriquement respectivement à une masse du hacheur de puissance et à une masse du rhéostat.

FR 2935930 A1 divulgue une chaîne de traction électrique pour véhicule ferroviaire comprenant des moyens de captage de l'énergie électrique sur une ligne d'alimentation, et au moins un circuit électronique de puissance comprenant un convertisseur statique de traction pour l'alimentation électrique d'au moins un moteur électrique. Elle comprend un contacteur disjoncteur statique (CDS) entre les moyens de captage et chaque circuit électronique de puissance, commandé pour s'ouvrir lorsque le courant qui le traverse atteint un seuil prédéterminé.

EP 2314492 A1 décrit des rames et convois ferroviaires bi-modes présentant un plancher bas sur toute la longueur de la rame. Une rame est formée d'au moins trois véhicules, comportant deux véhicules d'extrémité reposant chacun à leur extrémité libre sur un bogie moteur comportant au moins un moteur de traction électrique, et sur leur extrémité opposée sur un essieu d'un bogie porteur inter-caisse à deux essieux porteurs, au moins un véhicule intercalé, interposé entre les deux véhicules d'extrémité reposant à chaque extrémité sur un essieu d'un bogie porteur inter-caisse, et des matériels embarqués comprenant au moins un dispositif de raccordement à un réseau d'alimentation en énergie électrique, au moins un transformateur d'énergie, au moins un coffre électronique de traction, au moins un dispositif de freinage rhéostatique, au moins un groupe électrogène, au moins un réservoir de carburant liquide, au moins un ensemble d'accumulateurs. Au moins un réservoir de carburant est disposé en sous-châssis d'un véhicule d'extrémité, au moins un ensemble d'accumulateurs est disposé à l'intérieur d'un véhicule d'extrémité approximativement au-dessus du bogie moteur et tous les autres matériels embarqués sont disposés en toiture, répartis sur les véhicules de la rame.L'un des buts de l'invention est de pallier les inconvénients précités en proposant un véhicule terrestre guidé dans lequel l'agencement des équipements sur le toit est optimisé.

A cet effet, l'invention a pour objet un véhicule terrestre guidé du type précité, dans lequel les moyens de traction comprenant au moins un coffre de traction comportant un convertisseur statique.

Grâce à l'intégration d'un convertisseur statique dans un coffre de traction, l'espace disponible sur le toit du véhicule est augmenté et la masse des équipements sur le toit est réduite pour intégrer des moyens d'alimentation en cas d'effacement de ligne aérienne de contact.

La charge à l'essieu est ainsi réduite et mieux répartie.

Le véhicule terrestre guidé selon l'invention peut comprendre l'une ou plusieurs des caractéristiques suivantes, prises seules ou selon toutes combinaisons techniquement envisageables :
le véhicule terrestre guidé comprend un ensemble d'au plus neuf voitures, et le toit du véhicule comprend, sur ledit ensemble, au plus trois coffres de conditionnement d'air à destination des salles de voyageurs ;
le véhicule terrestre guidé comprend une pluralité de voitures dont au moins une voiture d'extrémité, la voiture d'extrémité comprenant une cabine de pilotage, un bogie est agencé sous la cabine de pilotage ;
le véhicule terrestre guidé comprend un ensemble d'au plus neuf voitures, et le toit du véhicule comprend, sur ledit ensemble, au plus trois coffres de traction ;
le véhicule terrestre guidé comprend une pluralité de voitures et chaque coffre de traction est associé à un rhéostat, le coffre de traction et le rhéostat associé étant agencés sur le toit de la même voiture ;
le véhicule terrestre guidé comprend au moins un bogie, le bogie comportant au moins un moteur, le moteur étant à aimant permanent autoventilé ;
les moyens d'alimentation en cas d'effacement de ligne aérienne de contact comprennent au moins un coffre d'alimentation autonome, ou au moins un coffre adapté pour une alimentation par le sol, ou au moins un coffre adapté pour un système de recharge statique par contact au sol ;
le véhicule terrestre guidé comprend une pluralité de voitures dont au moins une voiture d'extrémité, la voiture d'extrémité comprenant une cabine de pilotage comportant un châssis et une salle de voyageurs comportant un châssis distinct du châssis de la cabine de pilotage, et le châssis de la cabine de pilotage comprend au moins un siège à destination des voyageurs ;
le châssis de la cabine de pilotage comprend une cloison séparant la cabine de pilotage de la salle de voyageurs, la cloison présentant une porte permettant d'entrer et sortir de la cabine de pilotage, la porte étant de préférence coulissante ;
le au moins un siège à destination des voyageurs est fixé à la cloison.

L'invention sera mieux comprise à la lecture de la description qui va suivre, donnée uniquement à titre d'exemple et faite en se référant aux dessins sur lesquels :
- [Fig.1] la figure 1 est une représentation schématique de côté d'un véhicule terrestre guidé selon un premier mode de réalisation de l'invention ;
- [Fig.2] la figure 2 est une représentation de l'intérieur d'une voiture d'extrémité du véhicule terrestre guidé de la Fig.1 ;
- [Fig.3] la Fig. 3 est une représentation schématique de dessus d'un véhicule terrestre guidé de la Fig. 1 ;
- [Fig.4] la figure 4 est une représentation schématique de dessus d'un véhicule terrestre guidé selon un deuxième mode de réalisation de l'invention ; et
- [Fig.5] la figure 5 est selon un troisième mode de réalisation de l'invention.

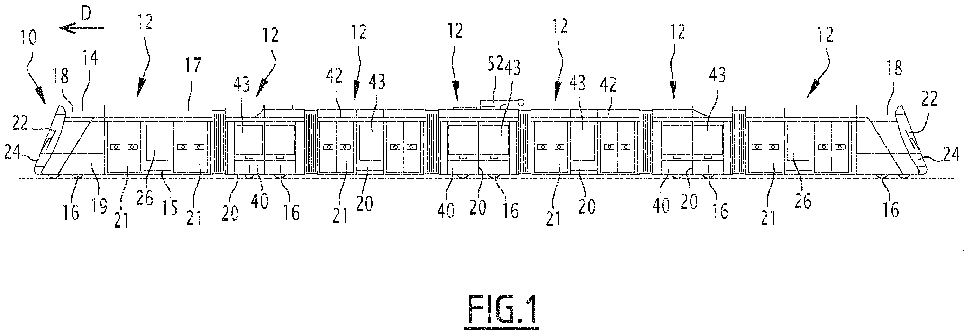

On a représenté, sur la figure 1, un véhicule terrestre guidé 10, par exemple un tramway, selon un premier mode de réalisation de l'invention.

Le véhicule 10 est destiné à circuler sur une voie, notamment une voie ferrée, c'est-à-dire formée par des rails sur lesquels le véhicule 10 est disposé et définissant la trajectoire suivie par le véhicule 10.

Le véhicule terrestre guidé 10 comprend une pluralité de voitures 12.

En particulier, le véhicule terrestre guidé 10 comprend au moins un ensemble d'au plus neuf voitures 12.

Chaque voiture 12 comprend un châssis 14.

Le châssis 14 est formé par un plancher 15, un toit 17 et deux parois latérales 19. Au moins l'une des voitures 12 comprend un bogie 16.

Avantageusement, au moins l'un des bogies 16 comprend au moins un moteur, le moteur étant un moteur à aimant permanent autoventilé.

Par exemple, chaque bogie 16 comprend deux moteurs à aimant permanent autoventilés.

Un tel bogie 16 ne nécessite pas de groupes de refroidissement. Ainsi, il n'est pas nécessaire de prévoir un groupe de refroidissement pour ce bogie 16. Or, dans un véhicule classique, le groupe de refroidissement est habituellement agencé sur le toit du véhicule. Il en résulte que l'espace, sur le toit 17, qui est habituellement réservé pour des groupes de refroidissement, est libéré dans un véhicule 10 selon l'invention.

Par ailleurs, les moteurs à aimant permanent autoventilés présentent un meilleur rendement que des moteurs asynchrones, un frein électrodynamique plus fort et une disponibilité immédiate.

Avantageusement, chaque voiture 12 communique directement avec la voiture 12 adjacente. En d'autres termes, le véhicule 10 ne comporte pas de cloisons entre deux voitures 12 adjacentes. Ainsi, des voyageurs peuvent passer d'une voiture 12 à l'autre sans passer par l'extérieur du véhicule 10.

Les parois latérales 19 d'au moins l'une des voitures 12 comprennent des portes 21 donnant sur l'extérieur du véhicule 10.

Avantageusement, chaque porte 21 présente une largeur suffisante pour être franchie par deux personnes simultanément ou un usager de fauteuil roulant.

Dans l'exemple décrit, la pluralité de voitures 12 comprend au moins deux voitures d'extrémité 18, et au moins cinq voitures intermédiaires 20.

Avantageusement, chaque voiture 12 présente une largeur comprise entre 2400 mm et 2650 mm.

Dans tout ce qui suit les termes « avant », « arrière », « sur » et « sous » sont définis par rapport au sens de déplacement vers l'avant du véhicule 10, indiqué par une flèche D sur les figures. Les termes « longitudinal », « transversal », sont définis par rapport au véhicule 10.

En effet, le véhicule 10 est propre à circuler dans les deux sens, les extrémités avant et arrière étant identiques.

Selon le sens de circulation, l'une des voitures d'extrémités 18 forme une voiture de tête, qui est celle qui se situe à l'avant du véhicule 10 par rapport au sens de déplacement.

Dans ce qui suit, on s'attache à décrire l'une des voitures d'extrémité, la description s'appliquant de la même façon à l'autre voiture d'extrémité 18.

La voiture d'extrémité 18 présente une cabine de pilotage 22, prévue à une extrémité 24 de la voiture d'extrémité 18, et une salle de voyageurs 26.

La cabine de pilotage 22 comprend un pupitre de conduite et un siège à destination du conducteur.

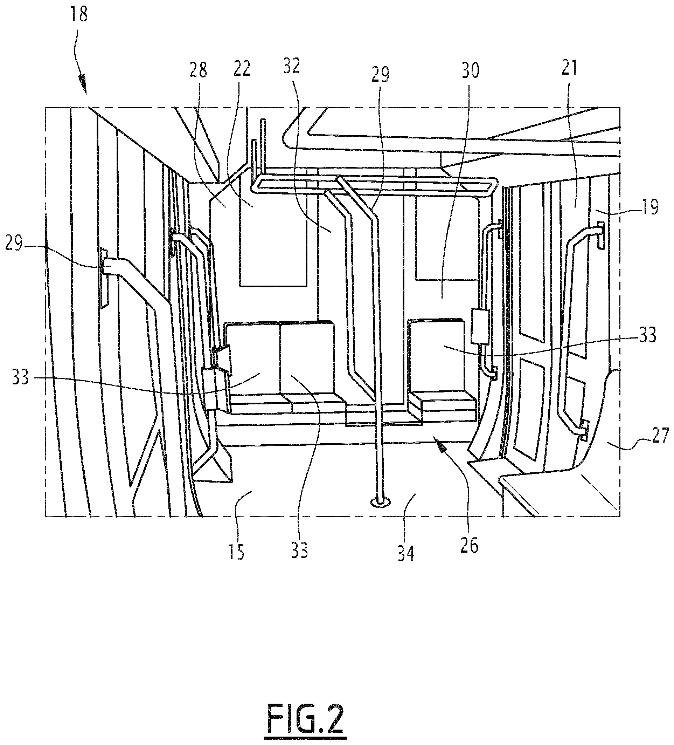

La salle de voyageurs 26 comprend de façon connue une pluralité de sièges 27 et une pluralité de dispositifs de maintien 29, comme représenté sur la figure 2.

La cabine de pilotage 22 comprend un châssis 28.

Le châssis 28 de la cabine de pilotage 22 comprend une cloison 30 séparant la cabine de pilotage 22 de la salle de voyageurs 26.

La cloison 30 présente une porte 32 permettant au conducteur d'entrer et sortir de la cabine de pilotage 22.

De préférence, la porte 32 est coulissante. Cela permet de libérer de l'espace dans la voiture d'extrémité 18 pour installer des sièges 33 contre la cloison 30.

La salle de voyageurs 26 comprend un châssis 34 distinct du châssis 28 de la cabine de pilotage 22.

Avantageusement, le châssis 28 de la cabine de pilotage 22 comprend au moins un siège 33 à destination des voyageurs.

Sur l'exemple de la figure 2, le châssis 28 de la cabine de pilotage 22 comprend trois sièges 33 à destination des voyageurs.

Une telle disposition de la voiture d'extrémité 18 permet d'augmenter l'espace destiné aux voyageurs dans cette voiture 18 tout en respectant le confort des voyageurs.

Avantageusement, la voiture d'extrémité 18 repose sur l'un des bogies 16.

En particulier, le bogie 16 sur lequel repose la voiture d'extrémité 18 est agencé sous la cabine de pilotage 22.

Cela permet, lorsque le véhicule 10 emprunte une courbe, de limiter le déplacement de la cabine de pilotage 22 vers l'extérieur de la courbe et offre une faible emprise de la cabine de pilotage 22 dans son déplacement. Par conséquent, l'espace nécessaire autour de la voie sur laquelle le véhicule 10 circule est réduit.

En outre, en cas de choc latéral avec un véhicule tiers, la présence du bogie 16 sous la cabine de pilotage 22 limite fortement les efforts entre le véhicule tiers et l'avant du véhicule 10 qui auraient tendance à faire dérailler le bogie 16.

La présence du bogie 16 sous la cabine de pilotage 22 a également pour conséquence que lorsque le véhicule 10 est à quai, un seuil 36 d'une porte 21 de la voiture d'extrémité 18 donnant sur l'extérieur du véhicule 10 est espacé du quai d'une distance maximale de 50 mm

Il est alors aisé pour une personne à mobilité réduite de monter à bord du véhicule 10.

Avantageusement encore, l'extrémité 24 de la voiture d'extrémité 18 est très proche du niveau de la voie sur laquelle circule le véhicule 10. Cela permet de mieux chasser un piéton en cas de choc avec le véhicule 10 avant qu'il ne heurte le bogie 16 sous la voiture d'extrémité 18. Optionnellement, une barre transversale (non représentée) est fixée au bogie 16 sous la voiture d'extrémité 18 au voisinage de l'extrémité 24 de la voiture d'extrémité 18.

Les voitures intermédiaires 20 comprennent au moins deux voitures motrices 40, ou nacelles motrices 40, et une voiture suspendue 42, portée par les voitures motrices 40.

Les voitures intermédiaires 20 comportent chacune une salle de voyageurs 43.

La salle de voyageurs 43 comprend de façon connue une pluralité de sièges et une pluralité de dispositifs de maintien (non représentés).

Les bogies 16 des voitures intermédiaires 20 sont agencés sous les voitures motrices 40.

De préférence, les voitures motrices 40 sont plus courtes que les voitures suspendues 42.

Selon l'exemple représenté, seules les voitures d'extrémité 18 et les voitures suspendues 42 comprennent des portes 21 donnant sur l'extérieur du véhicule 10.

Selon l'exemple représenté sur les figures, le véhicule 10 comprend sept voitures 12 parmi lesquelles deux voitures d'extrémité 18, trois voitures motrices 40 et deux voitures suspendues 42, les voitures motrices 40 étant alternées avec les voitures suspendues 42.

Bien entendu, toute autre configuration possible du véhicule 10 est envisageable.

Avantageusement, le châssis 14 du véhicule est réalisé en aluminium.

L'épaisseur du châssis 14 est de préférence réduite au minimum de façon à alléger au maximum le châssis 14.

Le véhicule 10 comprend une pluralité d'équipements 50 embarqués sur le toit 17.

Les équipements 50 sont fixés au toit 17 par tout moyen techniquement envisageable.

Les équipements 50 sont répartis sur le toit 17 de façon avantageuse comme cela va être détaillé ci-dessous.

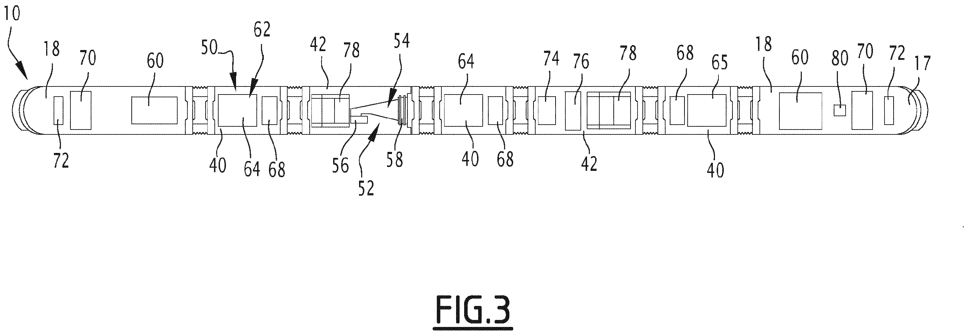

La figure 3 représente la disposition des équipements 50 sur le toit 17 du véhicule 10 selon le premier mode de réalisation de l'invention.

Les équipements 50 comprennent des moyens 52 de connexion à une ligne aérienne de contact (non représentée).

Les moyens 52 de connexion à la ligne aérienne de contact comprennent par exemple de façon connue un pantographe 54, une boîte à fusibles 56 et un parafoudre 58.

Les équipements 50 comprennent des moyens 60 d'alimentation en cas d'effacement de ligne aérienne de contact.

Les moyens 60 d'alimentation en cas d'effacement de ligne aérienne de contact permettent d'alimenter le véhicule 10 lorsque la ligne aérienne de contact est absente, par exemple lorsque le véhicule 10 roule en autonomie, ou en alimentation par le sol, ou avec un système de recharge statique par contact au sol.

Les moyens 60 d'alimentation en cas d'effacement de ligne aérienne de contact sont par exemple des coffres 60 d'alimentation autonome, tels que des coffres de batteries ou un système de pile à combustible associé à un réservoir d'hydrogène, ou des coffres adaptés pour une alimentation par le sol, ou des coffres adaptés pour un système de recharge statique par contact au sol.

Les équipements 50 comprennent des moyens de traction 62.

Les moyens de traction 62 comprennent au moins un coffre de traction 64 comportant un convertisseur statique.

Le convertisseur statique est configuré pour restituer de la tension en fréquence fixe ou variable afin d'alimenter en tension les circuits auxiliaires, notamment à des tensions de 400 Volts pour les coffres de conditionnement d'air et 24 Volts pour le contrôle commande du train.

Chaque convertisseur statique est ainsi propre à alimenter en tension les circuits auxiliaires, tels que l'éclairage, la climatisation (coffres de conditionnement d'air), le système d'annonce à bord du train, etc.

Un tel coffre de traction 64 ne nécessite pas un coffre supplémentaire comprenant uniquement un convertisseur statique, et permet ainsi de réaliser un important gain de masse sur le toit 17 du véhicule 10, par rapport à l'utilisation connue d'un coffre de traction dépourvu de convertisseur statique et d'un coffre distinct comprenant un convertisseur statique.

A titre d'exemple, pour un véhicule comprenant trois coffres de traction de 550 kg chacun et un convertisseur statique de 350 kg, la masse totale de ces équipements est de 2000 kg.

Pour un véhicule selon l'invention comprenant deux coffres de traction comportant chacun un convertisseur statique de 650 kg et un coffre de traction de 550 kg, la masse totale de ces équipements est de 1850 kg, soit un gain de masse de 9 % environ.

Da manière classique, un coffre de traction comprend, par exemple, un onduleur connecté à un moteur de traction et/ou un redresseur et des moyens de filtrage.

Les moyens de traction 62 comprennent optionnellement en outre au moins un coffre de traction 65 dépourvu de convertisseur statique.

En tout état de cause, les moyens de traction 62 sont dépourvus de coffre supplémentaire comprenant uniquement un convertisseur statique.

Chaque coffre de traction 64, 65 est associé à un rhéostat 68. Plus particulièrement, chaque coffre de traction 64, 65 et le rhéostat 68 associé sont agencés sur le toit 17 de la même voiture 12.

Les équipements 50 comprennent avantageusement au moins un coffre basse tension 70 et au moins un coffre de conditionnement d'air 72 de la cabine de pilotage 22.

Les équipements 50 comprennent une batterie 74 et un coffre basse tension additionnel 76.

Les équipements 50 comprennent des moyens de conditionnement d'air 78 des salles de voyageurs 26, 43.

Les moyens de conditionnement d'air 78 des salles de voyageurs 26, 43 sont typiquement des coffres de conditionnement d'air 78.

Les équipements 50 comprennent par exemple deux ou trois coffres de conditionnement d'air 78 des salles de voyageurs 26, 43, de préférence deux coffres de conditionnement d'air 78 des salles de voyageurs 26, 43.

Pour cela, le châssis 14 délimite des passages d'air (non représentés) présentant une section la plus importante possible, notamment entre les voitures 12, où la section de passage peut atteindre 70000 mm², et les coffres de conditionnement d'air 78 sont étudiés pour permettre un soufflage le plus efficace possible, notamment en optimisant la reprise d'air ainsi que la diffusion.

Ainsi, de l'espace et de la masse sont libérés sur le toit 17 du véhicule 10.

Les équipements 50 comprennent un système d'aide à l'exploitation 80. Le système d'aide à l'exploitation 80 comprend typiquement une antenne de communication bord-sol.

Avantageusement, comme indiqué précédemment, les équipements 50 ne comprennent pas de groupes de refroidissement des moteurs des bogies 16.

Ainsi, de l'espace et de la masse sont libérés sur le toit 17 du véhicule 10.

Selon le premier mode de réalisation représenté sur la figure 3, les deux voitures d'extrémité 18 comprennent chacune sur leur toit 17 un coffre basse tension 70 et un coffre de conditionnement d'air 72 de la cabine de pilotage 22.

L'une des voitures d'extrémité 18 (à droite sur la figure 3), comprend en outre le système d'aide à l'exploitation 80.

Les trois voitures motrices 40 comprennent chacune sur leur toit 17 un coffre de traction 64, 65 et un rhéostat 68.

Par exemple, deux des trois coffres de traction 64 comportent un convertisseur statique, et le troisième coffre de traction 65 est dépourvu de convertisseur statique.

Chacune des deux voitures suspendues 42 comprend sur son toit 17 des moyens de conditionnement d'air 78 des salles de voyageurs 26, 43.

Chacune des deux voitures suspendues 42 comprend sur son toit 17 un coffre de conditionnement d'air 78 des salles de voyageurs 26, 43.

L'une des deux voitures suspendues 42, à gauche sur la figure 3, comprend sur le toit 17 les moyens de connexion 52 à la ligne aérienne de contact.

L'autre des deux voitures suspendues 42, à droite sur la figure 3, comprend sur le toit 17 une batterie 74 et un coffre basse tension additionnel 76.

Dans cette configuration, le véhicule 10 comprend sur son toit 17 trois coffres de traction 64, 65 et deux coffres de conditionnement d'air 78 des salles de voyageurs 26, 43.

Grâce à une telle disposition, de l'espace est libéré sur le toit 17 et chaque voiture d'extrémité 18 comprend en outre sur le toit 17 des moyens d'alimentation en cas d'effacement de ligne aérienne de contact 60.

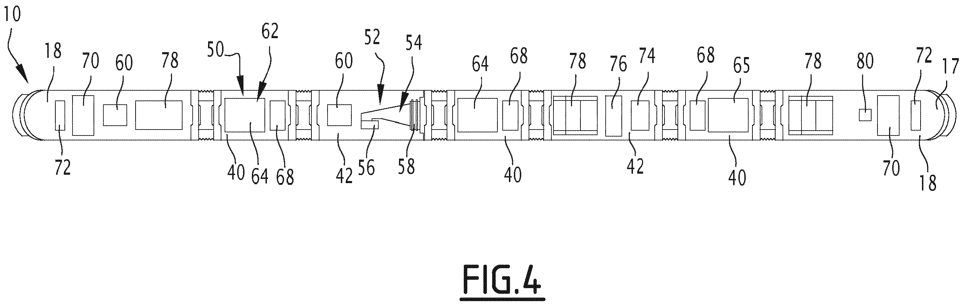

Selon le deuxième mode de réalisation représenté sur la figure 4, les deux voitures d'extrémité 18 comprennent chacune sur leur toit 17 un coffre basse tension 70, un coffre de conditionnement d'air 72 de la cabine de pilotage 22, et un coffre de conditionnement d'air 78 des salles de voyageurs 26, 43.

L'une des voitures d'extrémité 18 (à droite sur la figure 3), comprend en outre le système d'aide à l'exploitation 80.

Les trois voitures motrices 40 comprennent chacune sur leur toit 17 un coffre de traction 64, 65 et un rhéostat 68.

Par exemple, deux des trois coffres de traction 64 comportent un convertisseur statique, et le troisième coffre de traction 65 est dépourvu de convertisseur statique.

L'une des deux voitures suspendues 42, à gauche sur la figure 4, comprend sur le toit 17 les moyens de connexion 52 à la ligne aérienne de contact.

L'autre des deux voitures suspendues 42, à droite sur la figure 4, comprend sur le toit 17 une batterie 24 Volts 74, un coffre basse tension additionnel 76 et un coffre de conditionnement d'air 78 des salles de voyageurs 26, 43.

Dans cette configuration, le véhicule 10 comprend sur son toit 17 trois coffres de traction 64, 65 et trois coffres de conditionnement d'air 78 des salles de voyageurs 26, 43.

Grâce à une telle disposition, de l'espace est libéré sur le toit 17 et l'une des voitures d'extrémité 18, à gauche sur la figure 4, comprend en outre sur le toit 17 des moyens d'alimentation en cas d'effacement de ligne aérienne de contact 60. De la même façon, l'une des voitures suspendues 42, à gauche sur la figure 4, comprend sur le toit 17, outre les moyens de connexion 52 à la ligne aérienne de contact, des moyens d'alimentation en cas d'effacement de ligne aérienne de contact 60.

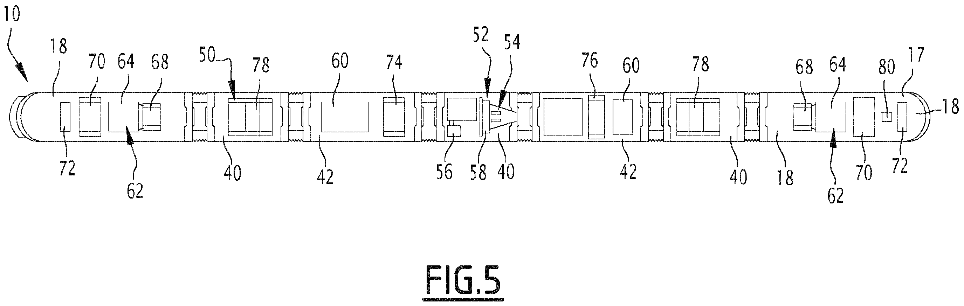

Selon le troisième mode de réalisation représenté sur la figure 5, les deux voitures d'extrémité 18 comprennent chacune sur leur toit 17 un coffre basse tension 70, un coffre de conditionnement d'air 72 de la cabine de pilotage 22, un coffre de traction 64, 65 et un rhéostat 68.

Par exemple, les deux coffres de traction 64 comportent un convertisseur statique, ou l'un des deux coffres de traction 64 comportent un convertisseur statique et l'autre coffre de traction 65 est dépourvu de convertisseur statique.

L'une des voitures d'extrémité 18 (à droite sur la figure 5), comprend en outre le système d'aide à l'exploitation 80.

Les deux voitures motrices 40 adjacentes aux voitures d'extrémité 18 comprennent chacune sur leur toit 17 un coffre de conditionnement d'air 78 des salles de voyageurs 26, 43.

La voiture motrice 40 centrale, c'est-à-dire placée entre les deux voitures suspendues 42, comprend sur le toit 17 les moyens de connexion 52 à la ligne aérienne de contact.

L'une des deux voitures suspendues 42, à gauche sur la figure 4, comprend sur le toit 17 une batterie 74.

L'autre des deux voitures suspendues 42, à droite sur la figure 5, comprend sur le toit 17 un coffre basse tension additionnel 76.

Dans cette configuration, le véhicule 10 comprend sur son toit 17 deux coffres de traction 64, 65 et deux coffres de conditionnement d'air 78.

Grâce à une telle disposition, de l'espace est libéré sur le toit 17 et chaque voiture suspendue 42 comprend en outre sur le toit 17 des moyens d'alimentation en cas d'effacement de ligne aérienne de contact 60.

Le véhicule terrestre guidé 10 selon l'invention est donc apte à circuler en présence et en l'absence de ligne aérienne de contact, et présente une disposition des équipements 50 sur le toit 17 améliorée pour accueillir les moyens d'alimentation en cas d'effacement de ligne aérienne de contact 60.

Par ailleurs, selon les conditions opérationnelles, le véhicule terrestre 10 permet de moduler l'aménagement du toit 17, notamment en variant le nombre de coffres de traction, et de coffres de conditionnement d'air 78 des salles de voyageurs 26, 43.

On notera que l'invention n'est pas limitée aux modes de réalisation précédemment décrits, mais pourrait présenter diverses variantes supplémentaires.

## Revendications

1. Véhicule terrestre guidé (10) destiné à circuler sur une voie ferrée, le véhicule comprenant :
- un toit (17),
- le véhicule (10) comprenant sur son toit (17) des moyens de connexion (52) à une ligne aérienne de contact,
- des moyens (60) d'alimentation en cas d'effacement de ligne aérienne de contact, embarqués sur le toit (17), et
- des moyens de traction (62) embarqués sur le toit (17),
**caractérisé en ce que** les moyens de traction (62) comprennent au moins un coffre de traction (64) comportant un convertisseur statique, le convertisseur statique étant configuré pour alimenter en tension les circuits auxiliaires, les circuits auxiliaires comprenant au moins l'éclairage, la climatisation ou le système d'annonce à bord du véhicule.

2. Véhicule terrestre guidé (10) selon la revendication 1, comprenant un ensemble d'au plus neuf voitures (12), et dans lequel le toit (17) du véhicule (10) comprend, sur ledit ensemble, au plus trois coffres de conditionnement d'air (78) à destination des salles de voyageurs (26, 43).

3. Véhicule terrestre guidé (10) selon la revendication 1 ou 2, comprenant une pluralité de voitures (12) dont au moins une voiture d'extrémité (18), la voiture d'extrémité (18) comprenant une cabine de pilotage (22), dans lequel un bogie (16) est agencé sous la cabine de pilotage (22).

4. Véhicule terrestre guidé (10) selon l'une quelconque des revendications 1 à 3, comprenant un ensemble d'au plus neuf voitures (12), et dans lequel le toit (17) du véhicule comprend, sur ledit ensemble, au plus trois coffres de traction (64, 65).

5. Véhicule terrestre guidé (10) selon l'une quelconque des revendications précédentes, comprenant une pluralité de voitures (12) et dans lequel chaque coffre de traction (64, 65) est associé à un rhéostat (68), le coffre de traction (64, 65) et le rhéostat (68) associé étant agencés sur le toit (17) de la même voiture (12).

6. Véhicule terrestre guidé (10) selon l'une quelconque des revendications 1 à 5, comprenant au moins un bogie (16), le bogie (16) comportant au moins un moteur, le moteur étant à aimant permanent autoventilé.

7. Véhicule terrestre guidé (10) selon l'une quelconque des revendications 1 à 6, dans lequel les moyens (60) d'alimentation en cas d'effacement de ligne aérienne de contact comprennent au moins un coffre (60) d'alimentation autonome, ou au moins un coffre adapté pour une alimentation par le sol, ou au moins un coffre adapté pour un système de recharge statique par contact au sol.

8. Véhicule terrestre guidé (10) selon l'une quelconque des revendications 1 à 7, comprenant une pluralité de voitures (12) dont au moins une voiture d'extrémité (18), la voiture d'extrémité (18) comprenant une cabine de pilotage (22) comportant un châssis (28) et une salle de voyageurs (26) comportant un châssis (34) distinct du châssis de la cabine de pilotage (22), et dans lequel le châssis (28) de la cabine de pilotage (22) comprend au moins un siège (33) à destination des voyageurs.

9. Véhicule terrestre guidé (10) selon la revendication 8, dans lequel le châssis (28) de la cabine de pilotage (22) comprend une cloison (30) séparant la cabine de pilotage (22) de la salle de voyageurs (26), la cloison (30) présentant une porte (32) permettant d'entrer et sortir de la cabine de pilotage (22), la porte (32) étant de préférence coulissante.

10. Véhicule terrestre guidé (10) selon la revendication 9, dans lequel le au moins un siège (33) à destination des voyageurs est fixé à la cloison.

## Patentansprüche

1. Geführtes Landfahrzeug (10), das dazu bestimmt ist, auf einer Eisenbahnstrecke zu fahren, das Fahrzeug umfassend:
- ein Dach (17),
- das Fahrzeug (10) umfassend, auf seinem Dach (17), Verbindungseinrichtungen (52) an einer Oberleitung,
- Einrichtungen (60) zur Stromversorgung im Fall einer Oberleitungsunterbrechung, die auf dem Dach (17) mitgeführt werden, und
- Traktionseinrichtungen (62), die auf dem Dach (17) mitgeführt werden,
**dadurch gekennzeichnet, dass** die Traktionseinrichtungen (62) mindestens einen Traktionskasten (64) umfassen, der einen statischen Wandler umfasst, wobei der statische Wandler konfiguriert ist, um die Hilfsschaltungen mit Spannung zu versorgen, die Hilfsschaltungen umfassend mindestens die Beleuchtung, die Klimaanlage oder das Borddurchsagesystem des Fahrzeugs.

2. Geführtes Landfahrzeug (10) nach Anspruch 1, umfassend eine Anordnung von höchstens neun Wagen (12), und wobei das Dach (17) des Fahrzeugs (10) auf der Anordnung höchstens drei Klimakästen (78) umfasst, die für die Fahrgasträume (26, 43) bestimmt sind.

3. Geführtes Landfahrzeug (10) nach Anspruch 1 oder 2, umfassend eine Vielzahl von Wagen (12), davon mindestens ein Endwagen (18), der Endwagen (18) umfassend ein Führerhaus (22), wobei ein Drehgestell (16) unter dem Führerhaus (22) angeordnet ist.

4. Geführtes Landfahrzeug (10) nach einem der Ansprüche 1 bis 3, umfassend eine Anordnung von höchstens neun Wagen (12), und wobei das Dach (17) des Fahrzeugs auf der Anordnung höchstens drei Traktionskästen (64, 65) umfasst.

5. Geführtes Landfahrzeug (10) nach einem der vorherigen Ansprüche, umfassend eine Vielzahl von Wagen (12) und wobei jeder Traktionskasten (64, 65) mit einem Rheostaten (68) assoziiert ist, wobei der Traktionskasten (64, 65) und der assoziierte Rheostat (68) auf dem Dach (17) desselben Wagens (12) angeordnet sind.

6. Geführtes Landfahrzeug (10) nach einem der Ansprüche 1 bis 5, umfassend mindestens ein Drehgestell (16), das Drehgestell (16) umfassend mindestens einen Motor, wobei der Motor ein selbstbelüfteter Permanentmagnet ist.

7. Geführtes Landfahrzeug (10) nach einem der Ansprüche 1 bis 6, wobei die Einrichtungen (60) zur Stromversorgung im Fall einer Oberleitungsunterbrechung mindestens einen Kasten (60) zur autonomen Stromversorgung oder mindestens einen Kasten, der für eine Stromversorgung über den Boden angepasst ist, oder mindestens einen Kasten, der für ein statisches Aufladesystem durch Bodenkontakt angepasst ist, umfassen.

8. Geführtes Landfahrzeug (10) nach einem der Ansprüche 1 bis 7, umfassend eine Vielzahl von Wagen (12), davon mindestens ein Endwagen (18), der Endwagen (18) umfassend ein Führerhaus (22), umfassend einen Rahmen (28) und einen Fahrgastraum (26), umfassend einen von dem Rahmen des Führerhauses (22) getrennten Rahmen (34), und wobei der Rahmen (28) des Führerhauses (22) mindestens einen Sitz (33) umfasst, der für Fahrgäste bestimmt ist.

9. Geführtes Landfahrzeug (10) nach Anspruch 8, wobei der Rahmen (28) des Führerhauses (22) eine Trennwand (30) umfasst, die die Fahrerkabine (22) von dem Fahrgastraum (26) trennt, wobei die Trennwand (30) eine Tür (32) aufweist, die das Betreten und Verlassen des Führerhauses (22) ermöglicht, wobei die Tür (32) vorzugsweise eine Schiebetür ist.

10. Geführtes Landfahrzeug (10) nach Anspruch 9, wobei der mindestens eine Sitz (33), der für Fahrgäste bestimmt ist, an der Trennwand befestigt ist.

## Claims

1. A guided land vehicle (10) for travelling on a railway track, the vehicle comprising :
- a roof (17),
- the vehicle (10) comprising, on its roof (17), means for connection (52) to an overhead contact line,
- means (60) for supplying power in the event of an overhead contact line failure, mounted on the roof (17), and
- traction means (62) mounted on the roof (17),
**characterised in that** the traction means (62) comprise at least one traction box (64) having a static converter, the static converter being configured to supply voltage to the auxiliary circuits, the auxiliary circuits comprising at least the lighting, the air conditioning or the on-board announcement system of the vehicle.

2. A guided land vehicle (10) according to claim 1, comprising a set of at most nine cars (12), and in which the roof (17) of the vehicle (10) comprises, on said set, at most three air conditioning boxes (78) for the passenger rooms (26, 43).

3. A guided land vehicle (10) according to claim 1 or 2, comprising a plurality of carriages (12) including at least one end carriage (18), the end carriage (18) comprising a driver's cab (22), in which a bogie (16) is arranged under the driver's cab (22).

4. A guided land vehicle (10) according to any one of claims 1 to 3, comprising a set of at most nine cars (12), and in which the roof (17) of the vehicle comprises, on said set, at most three traction boxes (64, 65).

5. A guided land vehicle (10) according to any one of the preceding claims, comprising a plurality of cars (12) and in which each traction box (64, 65) is associated with a rheostat (68), the traction box (64, 65) and the associated rheostat (68) being arranged on the roof (17) of the same car (12).

6. A guided land vehicle (10) according to any one of claims 1 to 5, comprising at least one bogie (16), the bogie (16) having at least one motor, the motor being a self-ventilated permanent magnet.

7. A guided land vehicle (10) according to any one of claims 1 to 6, in which the means (60) for powering in the event of overhead contact line deletion comprises at least one self-contained power supply box (60), or at least one box adapted for ground power supply, or at least one box adapted for a static ground contact charging system.

8. A guided land vehicle (10) according to any one of claims 1 to 7, comprising a plurality of carriages (12) including at least one end carriage (18), the end carriage (18) comprising a driver's cab (22) having a chassis (28) and a passenger room (26) having a chassis (34) separate from the chassis of the driver's cab (22), and in which the chassis (28) of the driver's cab (22) comprises at least one passenger seat (33).

9. A guided land vehicle (10) according to claim 8, in which the frame (28) of the cockpit (22) comprises a partition (30) separating the cockpit (22) from the passenger compartment (26), the partition (30) having a door (32) for entering and exiting the cockpit (22), the door (32) preferably being sliding.

10. A guided land vehicle (10) according to claim 9, in which the at least one passenger seat (33) is attached to the bulkhead.
